**Europäisches Patentamt**

**European Patent Office**

**Office européen des brevets**

(19)

(11) Veröffentlichungsnummer: **0 253 086**
**B1**

(12)

# EUROPÄISCHE PATENTSCHRIFT

(45) Veröffentlichungstag der Patentschrift:
**18.07.90**

(51) Int. Cl.⁵: **F16J 15/32**, F16J 15/40,
F16J 1/02

(21) Anmeldenummer: **87106851.6**

(22) Anmeldetag: **12.05.87**

(54) **Einrichtung zum Abdichten zweier relativ gegeneinander bewegbarer Maschinenteile, insbesondere zum Abdichten des Kolbens eines Arbeitszylinders.**

(30) Priorität: **16.07.86 DE 3623928**

(43) Veröffentlichungstag der Anmeldung:
**20.01.88 Patentblatt 88/3**

(45) Bekanntmachung des Hinweises auf die Patenterteilung:
**18.07.90 Patentblatt 90/29**

(84) Benannte Vertragsstaaten:
**AT CH DE ES FR GB IT LI NL SE**

(56) Entgegenhaltungen:
**EP-A- 0 031 052**
**DE-A- 1 475 772**
**DE-U- 8 519 534**
**FR-A- 2 379 971**
**FR-A- 2 444 206**
**US-A- 3 418 001**
**US-A- 3 814 445**

(73) Patentinhaber: **WABCO Westinghouse
Steuerungstechnik GmbH & Co.,
Bartweg 13 Postfach 91 12 70, D-3000 Hannover 91(DE)**

(72) Erfinder: **Bernhardt, Bruno, Goerdelerstrasse 2/113,
D-7410 Reutlingen(DE)**
Erfinder: **Kedzierski, Heinrich, Dr., Am Wehr 9,
D-3015 Wennigsen(DE)**

(74) Vertreter: **Schrödter, Manfred, WABCO Westinghouse
Fahrzeugbremsen GmbH Am Lindener
Hafen 21 Postfach 91 12 80, D-3000 Hannover 91(DE)**

## Beschreibung

Die Erfindung bezieht sich auf eine Einrichtung zum Abdichten zweier relativ gegeneinander bewegbarer Maschinenteile, insbesondere zum Abdichten des Kolbens eines Arbeitszylinders, gemäß dem Oberbegriff des Patentanspruchs 1.

Eine derartige Einrichtung zum Abdichten des Kolbens eines Arbeitszylinders ist durch die US-A 3 418 001 bekannt. Bei dieser Einrichtung wird einerseits von den hervorrangenden Gleit- und Dichteigenschaften des PTFE-Kunststoffes des Dichtkörpers Gebrauch gemacht. Zum anderen wird als elastischer Abstützkörper für den nicht ausreichend elastischen Dichtkörper ein in einer Nut des Kolbens angeordneter elastischer O-Ring verwendet, der die erforderliche elastische Anpreßkraft für den Dichtkörper aufbringt. Der Dichtkörper ist als Ring mit einem U-förmigen Querschnitt ausgebildet, der den O-Ring in Gleitrichtung umgreift und mit den Schenkeln des U-förmigen Querschnitts direkt auf dem elastischen Abstützkörper aufliegt und durch dessen nach außen auf die Gleitfläche des Zylinders gerichtete und als Dichtkraft wirkende Anpreßkraft in seinem mittleren Bereich etwas aufgewölbt wird, so daß sich eine Anlagefläche undefinierter Größe ergibt. Ein weiterer Nachteil dieser bekannten Einrichtung besteht darin, daß der Abstützkörper mit Spiel in axialer Richtung in der ihn aufnehmenden Nut angeordnet sein muß, die die für die Aufbringung der elastischen Dichtkraft erforderliche Volumenänderung des Abstützkörpers aufnehmen können muß. Ein solches Spiel bedeutet aber zugleich auch eine undefinierte axiale Stellung des Abstützkörpers bzw. eine unerwünschte, das exakte Positionieren des Kolbens erschwerende axiale Bewegungsmöglichkeit des Abstützkörpers in der Nut.

Die erwähnten Nachteile der bekannten Einrichtung sind vermeidbar, wenn ein anderes Prinzip der Dichtung verwendet wird, wie es durch die DE 2 458 974 A1 bekannt ist. Bei dieser bekannten Einrichtung wird ein Kolben in einem Arbeitszylinder von einer den Kolben in Gleitrichtung umgreifenden Gummi-Topfmanschette abgedichtet geführt. Die Manschette dieser bekannten Dichtung bildet vorteilhaft zwei Dichtkanten, die aufrund ihres elastischen Materials und der dadurch erzeugten Vorspannung an der Gleitfläche des Arbeitszylinders anliegen. Man könnte daran denken, diese bekannte Dichtung mit einer Schicht aus PTFE-Kunststoff oder einem ähnlichen Material mit hervorragenden Gleiteigenschaften zu überziehen. Eine solche Lösung würde aber konstruktive und fertigungstechnische Probleme aufwerfen, wobei nicht sichergestellt wäre, daß eine ausreichende elastische Anpreßkraft für die Dichtkanten erzielt würde.

Der Erfindung liegt deshalb die Aufgabe zugrunde, eine Einrichtung der eingangs genannten Art so weiterzubilden, daß die anhand der bekannten Topfmanschette erwähnten Vorteile einer Dichtung mit den Eigenschaften eines hervorragenden aber nicht oder kaum elastischen Gleitmaterials kombiniert werden können.

Diese Aufgabe wird durch die im Patentanspruch 1 angegebene Erfindung gelöst. Weiterbildungen und vorteilhafte Ausführungsformen der Erfindung sind in den Unteransprüchen angegeben.

Die Erfindung hat den Vorteil, daß sich durch die im eingebauten montierten Zustand vom Abstützkörper auf den Dichtkörper ausgeübte Vorspannung eine erhebliche zusätzliche Anpreßkraft in Richtung auf die Gleitfläche für den an der Gleitfläche entlanggleitenden Teil des Dichtkörpers ergibt. Der Verlauf der Dichtkraft in Gleitrichtung ist dann derart, daß sich an den freien Enden des Dichtkörpers ein Maximum an Dichtkraft ergibt und daß sich diese Dichtkraft im Mittelbereich des Dichtkörpers hin allmählich verringert. Auf diese Weise ergibt sich auch ein ausreichend definierbarer Dichtkanten-Bereich.

Die Erfindung ist nicht nur für die Führung und Abdichtung von Kolben in Arbeitszylindern einsetzbar. Sie kann vielmehr auch zur Führung bzw. Abdichtung einer langgestreckten Dichtkante auf einer ebenen oder gewellten Dichtfläche (Gleitfläche) dienen.

Es ist möglich, die Erfindung sowohl als einlippigen Dichtkörper als auch als Dichtkörper mit zwei Dichtlippen zu verwenden.

Die Erfindung wird anhand von zwei Ausführungsbeispielen, die in der Zeichnung dargestellt sind, näher erläutert.

Es zeigen:

Fig. 1 ein Ausführungsbeispiel der erfindungsgemäßen Einrichtung und

Fig. 2 eine Weiterbildung der Einrichtung nach Fig. 1.

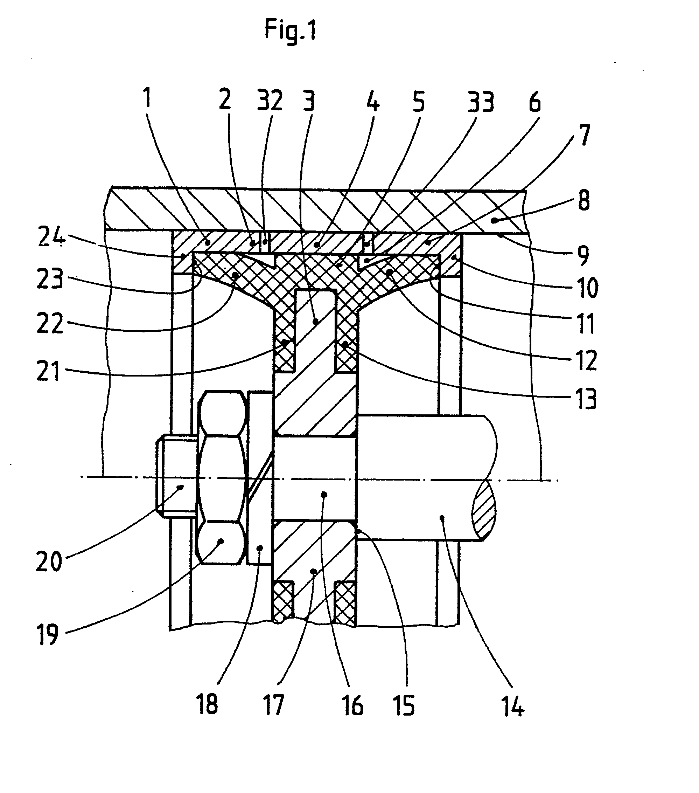

Fig. 1 zeigt einen Teil eines Arbeitszylinders, in dem ein mit Druckluft beaufschlagbarer Kolben abgedichtet geführt ist. Ein Zylinderrohr (8) weist in seinem Inneren eine Gleitfläche (9) für den an einer Kolbenstange (14) befestigten Kolben auf. Der Kolben besteht aus einem starren z.B. metallenen Träger (17), einem auf dem Träger (17) befestigten Abstützkörper (5) sowie einem Dichtkörper (2).

Der Träger (17) ist auf das verjüngte Ende (16) der Kolbenstange (14) aufgeschoben, so daß er an der Schulter (15) der Kolbenstange (14) anliegt. Zur Sicherung und Befestigung des Trägers (17) auf dem Ende (16) der Kolbenstange (14) ist eine Schraube (19) vorgesehen, die auf ein Gewinde (20) des Kolbenstangen-Endes (16) aufgeschraubt ist. Zwischen der Schraube (19) und dem Träger (17) ist ein Federring (18) angeordnet. Der Träger (17) ist in nicht dargestellter Weise verdrehsicher gegenüber der Kolbenstange (14) befestigt. Weiterhin ist der Träger (17) in nicht dargestellter Weise abgedichtet auf der Kolbenstange (14) befestigt. Hierzu kann z.B. ein zwischen dem Träger (17) und der Kolbenstange (14) angeordneter Dichtring dienen.

Der Träger (17) ist als Lochscheibe ausgebildet und weist auf seinem äußeren Randbereich eine geringere Dicke auf als auf seinem mittleren Bereich. Dieser äußere Randbereich (3) trägt den Abstützkörper (5), der aus Gummi oder einem ähnlich elastischen Material besteht. Der Abstützkörper (5) weist zwei ringförmige, nach innen gerichtete Vorsprünge (13) und (21) auf, mit denen der Abstützkörper (5) den äußeren Randbereich (3) des Trägers (17) umgreift. Der Abstützkörper (5) ist in nicht dargestellter Weise (z.B. mittels Klebstoff) an dem Träger (17) befestigt. Der Abstützkörper (5) weist ferner zwei sich in etwa in Gleitrichtung erstreckende hülsenförmige Vorsprünge (12) und (22) auf.

Der beschriebene Abstützkörper (5) wird in Gleitrichtung von dem Dichtkörper (2) umgriffen, der in Gleitrichtung und senkrecht zur Gleitfläche (9), d.h. in der Zeichnungsebene der Fig. 1, einen U-förmigen Querschnitt aufweist. Die beiden Schenkel des U werden von zwei ringförmigen, nach innen weisenden Vorsprüngen (10) und (24) des Dichtkörpers (2) gebildet. Die beiden senkrecht oder nahezu senkrecht zur Gleitfläche (9) verlaufenden Vorsprünge (10) und (24) des Dichtkörpers (2) liegen mit ihrer Innenfläche an den äußeren, insofern als Abstützflächen (11) und (23) dienenden Endflächen der Vorsprünge (12) und (22) des Abstützkörpers (5) an.

Der Dichtkörper (2) besteht aus einem sehr reibungsarmen Material, wie z.B. PTFE-Kunststoff, das jedoch auch relativ wenig elastisch ist. Für eine auch nach längerem Betrieb und auch nach eventuellem Verschleiß noch ausreichende Dichtung zwischen dem Kolben und der Gleitfläche ist es erforderlich, daß der Dichtkörper (2) unter einer elastischen Vorspannung an der Gleitfläche (9) anliegt. Das Material des Dichtkörpers (2) kann diese Vorspannung (Elastizität) an sich nicht oder nicht in ausreichendem Maße aufbringen. Aus diesem Grunde wird der Dichtkörper (2) von dem elastisch ausgebildeten Abstützkörper (5) abgestützt. Die beiden Vorsprünge (12) und (22) des Abstützkörpers (5) sind so ausgebildet und so bemessen, daß sie eine elastische Vorspannkraft auf die Endbereiche (1) und (7) des Dichtkörpers (2) ausüben. Zusätzlich zu dieser Vorspannkraft, die von der senkrecht zur Gleitfläche (9) wirkenden Elastizität des Abstützkörpers (5) erzeugt wird, wird mit der dargestellten Einrichtung eine weitere in Richtung auf die Gleitfläche (9) zu wirkende Vorspannkraft-Komponente durch folgende Maßnahmen erzeugt.

Der äußere Abstand der Abstützflächen (11) und (23) ist so bemessen, daß er im nicht montierten Zustand von Dichtkörper (2) und Abstützkörper (5) etwas größer ist als der innere Abstand zwischen den Vorsprüngen (10) und (24) des Dichtkörpers (2). Dies bedeutet, daß der Dichtkörper (2) bei der Montage der beschriebenen Einrichtung auf den Abstützkörper (5) aufgeklemmt werden muß. Im zusammengebauten Zustand üben also die Vorsprünge (12) und (22) des Abstützkörpers (5) mittels der Abstützflächen (11) und (23) Kräfte auf die Vorsprünge (10) und (24) des Dichtkörpers (2) auf, die in etwa in Gleitrichtung verlaufen und bei fehlender Abstützung durch die Gleitfläche (9) bewirken würden, daß der Dichtkörper (2) an seinen Enden (7) und (1) aufgeweitet bzw. aufgebogen würde. Im eingebauten Zustand des Kolbens im Zylinder liegt der Dichtkörper (2) an der Gleitfläche (9) an, so daß eine Aufweitung des Dichtkörpers (2) nicht stattfinden kann. Gleichwohl steht der Dichtkörper (2) unter einer entsprechenden Vorspannung, die bestrebt ist, den Dichtkörper (2) im Bereich der Vorsprünge (10) und (24) bzw. in den Endbereichen (1) und (7) aufzuweiten bzw. nach außen aufzubiegen, wobei die Vorsprünge (10) und (24) von den Kräften der Vorsprünge (12) und (22) gewissermaßen hebelartig beaufschlagt werden. Dies bedeutet, daß sich zusätzlich zu der elastischen, von den Vorsprüngen (12) und (22) auf den Dichtkörper (2) ausgeübten Anpreßkraft normaler Art eine zusätzliche Anpreßkraft durch den beschriebenen "Aufweitungs-Effekt" ergibt. Im Ergebnis ergibt sich für die als Dichtkraft wirkende und auf den Dichtkörper (2) ausgeübte Anpreßkraft in Richtung auf die Gleitfläche (9) ein Verlauf, der in den Endbereichen (1) und (7) des Dichtkörpers (2) ein Maximum aufweist und zum mittleren Bereich (4) des Dichtkörpers (2) hin eine stetige Abnahme zeigt. Der in Gleitrichtung gesehen mittlere Teil des Abstützkörpers (5) übt keine bzw. keine nennenswerte Anpreßkraft auf den Dichtkörper (2) aus.

Der sich in dem mittleren Bereich der beschriebenen Kolbenkonstruktion ergebende Raum (6) zwischen den als Dichtkanten wirkenden Enden (1) und (7) des Dichtkörpers (2) kann z.B. auf nicht dargestellte Weise entlüftet werden, um ein Druckgefälle zwischen den mit Druckluft beaufschlagbaren Kammern des Arbeitszylinders und dem erwähnten mittleren Bereich des Kolbens zu erzeugen.

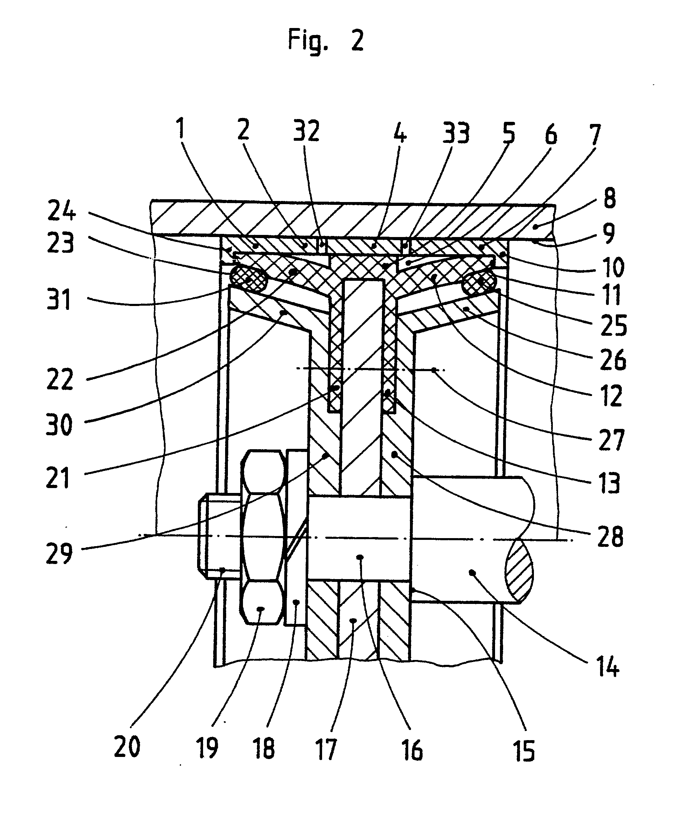

Fig. 2 zeigt eine Weiterbildung der in Fig. 1 dargestellten Einrichtung, z.B. für den Einsatz in hydraulischen Systemen. Bauteile mit denselben Funktionen in Fig. 1 und Fig. 2 sind auch mit denselben Bezugszeichen versehen. Zusätzlich zu den Bauteilen der in Fig. 1 dargestellten Einrichtung weist die Einrichtung nach Fig. 2 zwei starre z.B. metallene Stützglieder (28) und (29) auf. Diese Stützglieder (28) und (29) sind dadurch auf der Kolbenstange (14) bzw. am Kolben befestigt, daß sie wie der Träger (17) auf das verjüngte Ende (16) der Kolbenstange (14) aufgeschoben sind und beidseits des Trägers (17) angeordnet sind.

Mit nicht näher konkret ausgebildeten Befestigungsmitteln (27) sind die Stützglieder (28) und (29) so am Träger (17) befestigt, daß die Vorsprünge (13) und (21) des Abstützkörpers (5) zwischen den Stützgliedern (28) und (29) und dem Träger (17) angeordnet sind und in einer entsprechenden Kontur der Stützglieder (28) und (29) liegen.

Die Stützglieder (28) und (29) weisen jeweils einen nach außen gerichteten und in etwa in Gleitrichtung bzw. parallel zu den Vorsprüngen (12) und (22) des Abstütz körpers (5) verlaufenden hülsenförmigen Stützvorsprung (26) und (30) auf. Mittels dieser Stützvorsprünge (26) und (30) stützen die Stützglieder (28) und (29) die Vorsprünge (12) und (22) des Abstützkörpers (5) ab, wobei zwischen dem Stützvorsprung (26) und dem Vorsprung (12) des Abstützkörpers (5) ein als O-Ring ausgebildetes elastisches Stützteil (25) und zwischen dem Stützvorsprung (30) und dem Vorsprung (22) des Abstützkörpers (5) ein ebenfalls als O-Ring ausgebildetes weiteres elastisches Stützteil (31) angeordnet ist. Die Vorsprünge (12) und (22) des Abstützkörpers (5) sind zur besseren Übertragung von Abstützkräften mit einer der Form der Stützteile (25) und (31) angepaßten Kontur versehen. Die Stützteile (25) und (31) sind so angeordnet, daß sie die Vorsprünge (12) und (22) des Abstützkörpers (5) in deren äußeren Endbereichen unter Vorspannung abstützen.

Der Dichtkörper (2) ist mit zwei radialen Bohrungen (32) und (33) versehen, über die die Zwischenräume (6) zwischen dem Dichtkörper (2) und dem Abstützkörper (5) mit dem Raum zwischen dem Dichtkörper (2) und dem Zylinderrohr (8) verbunden sind und diese entlüften. Auf diese Weise wird die Entstehung des für die Verblockung des Kolbens erforderlichen Differenzdruckes gefördert.

Mit der soweit beschriebenen Einrichtung nach Fig. 2 können die auf den Dichtkörper (2) ausgeübten Anpreßkräfte im Bereich der Dichtkanten (1) und (7) des Dichtkörpers (2) noch vergrößert werden, um die Einrichtung selbst bei sehr hohen Drücken, wie sie z.B. in hydraulischen Systemen auftreten, einsetzen zu können.

**Patentansprüche**

1. Einrichtung zum Abdichten zweier relativ gegeneinander bewegbarer Maschinenteile, von denen das eine Teil (8) eine Gleitfläche (9) aufweist, an der das andere Teil (5, 17) mittels eines an diesem Teil befestigten Dichtkörpers (2) entlanggleitet, insbesondere zum Abdichten des Kolbens eines Arbeitszylinders, mit folgenden Merkmalen:
   a) der Dichtkörper (2) besteht aus einem reibungsarmen und relativ wenig elastischen Kunststoff, wie z.B. PTFE;
   b) zum Befestigen und zum Abstützen wenigstens des an der Gleitfläche entlanggleitenden Teils des Dichtkörpers (2) an dem anderen Teil ist ein Abstützkörper (5) vorgesehen;
   c) der Abstützkörper (5) ist so ausgebildet, daß er senkrecht zur Gleitfläche (9) elastisch ist;
   d) der an der Gleitfläche (9) entlanggleitende Teil des Dichtkörpers (2) ist so ausgebildet, daß er den Abstützkörper (5) in Gleitrichtung umgreift und daß senkrecht oder in etwa senkrecht zur Gleitfläche (9) verlaufende Befestigungsvorsprünge (10, 24) des Dichtkörpers (2) an entsprechenden, senkrecht oder in etwa senkrecht zur Gleitfläche (9) verlaufenden Abstützflächen (11, 23) des Abstützkörpers (5) anliegen; gekennzeichnet durch folgende Merkmale:
   e) in demontiertem Zustand von Dichtkörper (2) und Abstützkörper (5) ist der in Gleitrichtung gemessene äußere Abstand der Abstützflächen (11, 23) größer bemessen als der Abstand zwischen den Befestigungsvorsprüngen (10, 24) des Dichtkörpers (2);
   f) der an der Gleitfläche (9) entlanggleitende Teil des Dichtkörpers (2) ist so ausgebildet, daß er unter Wirkung der von den Abstützflächen (11, 23) auf die Befestigungsvorsprünge (10, 24) ausgeübten Vorspannung bestrebt ist, sich wenigstens im Bereich der Befestigungsvorsprünge (10, 24) zur Gleitfläche (9) hin aufzubiegen.

2. Einrichtung nach Anspruch 1 zum Abdichten des Kolbens eines Arbeitszylinders, gekennzeichnet durch folgende Merkmale:
   a) der andere Teil ist als Kolben ausgebildet, der den ringförmig ausgebildeten Abstützkörper (5) trägt;
   b) der an der Gleitfläche entlanggleitende Teil des Dichtkörpers (2) ist hülsenförmig bzw. nach Art einer Topfmanschette ausgebildet.

3. Einrichtung nach Anspruch 1 oder 2, dadurch gekennzeichnet, daß der Dichtkörper (2) senkrecht zur Gleitfläche (9) und in Gleitrichtung einen U-förmigen Querschnitt aufweist, bei dem die Schenkel die Befestigungsvorsprünge (10, 24) bilden.

4. Einrichtung nach Anspruch 1, 2 oder 3, gekennzeichnet durch folgende Merkmale:
   a) der Abstützkörper (5) weist wenigstens einen hülsenförmigen Vorsprung (12, 22) auf, der sich in Gleitrichtung oder in etwa in dieser Richtung erstreckt und den Dichtkörper (2) trägt;
   b) das Ende des Vorsprunges (12, 22) bildet eine der Abstützflächen (11, 23) des Abstützkörpers (5);
   c) es sind Mittel zur elastischen Abfederung des Vorsprunges (12, 22) senkrecht zur Gleitfläche (9) vorgesehen.

5. Einrichtung nach Anspruch 4, dadurch gekennzeichnet, daß der Abstützkörper (5) wenigstens in dem Verbindungsbereich zwischen dem Vorsprung (12, 22) und dem restlichen Teil des Abstützkörpers (5) aus einem relativ stark elastischen Material, wie z.B. Gummi, besteht.

6. Einrichtung nach Anspruch 4 oder 5, dadurch gekennzeichnet, daß der Abstützkörper (5) senkrecht zur Gleitfläche (9) und in Gleitrichtung einen T-förmigen Querschnitt aufweist, wobei die beiden den Querbalken bildenden Teile des Abstützkörpers (5) an ihren Enden die Abstützflächen (11, 23) des Abstützkörpers (5) bilden.

7. Einrichtung nach wenigstens einem der vorhergehenden Ansprüche, dadurch gekennzeichnet, daß der in Gleitrichtung gesehen mittlere Teil des Abstützkörpers (5) einen größeren Abstand von der Gleitfläche (9) aufweist, als die sich in Gleitrichtung erstreckenden Endbereiche (12, 22) des Abstützkörpers (5).

8. Einrichtung nach Anspruch 2, gekennzeichnet durch folgende Merkmale:
   a) es sind zwei starre Stützglieder (29, 29) vorgesehen, die am Kolben befestigbar sind und zur Abstützung der die Abstützflächen (11, 23) aufweisenden Enden des Abstützkörpers (5) dienen;
   b) zwischen den Stützgliedern (28, 29) und den die Abstützflächen (11, 23) aufweisenden Enden des Abstützkörpers (5) sind elastische Stützteile (25, 31) vorgesehen.

9. Einrichtung nach Anspruch 8, dadurch gekennzeichnet, daß die Stützteile (25, 31) als elastische Ringkörper nach Art von O-Ringen ausgebildet sind.

**Revendications**

1. Dispositif pour étancher deux parties de machine mobiles l'une par rapport à l'autre, la première partie (8) présentant une surface de glissement (9) le long et au contact de laquelle l'autre partie (5, 17) glisse au moyen d'un corps d'étanchéité (2) qui lui est fixé, notamment pour réaliser l'étanchéité du piston d'un cylindre de travail, avec les caractéristiques suivantes:

a) le corps d'étanchéité (2) est en une matière plastique à faible frottement, relativement peu élastique, par example en PTFE;

b) pour la fixation et le soutien d'au moins la partie du corps d'étanchéité (2) glissant le long de la surface de glissement, il est prévu un corps d'appui (5) sur l'autre partie;

c) ce corps d'appui (5) est conçu et réalisé de manière à être élastique perpendiculairement à la surface de glissement (9);

d) la partie du corps d'étanchéité (2) glissant contre et le long de la surface de glissement (9) est conçue et réalisée de manière à envelopper le corps d'appui (5) dans la direction du glissement, et de manière que des saillants de fixation (10, 24) du corps d'étanchéité (2), s'étendant perpendiculairement ou sensiblement perpendiculairement à la surface de glissement (9) s'appliquent contre des surfaces d'appui correspondantes (11, 23) du corps d'appui (5), lesquelles s'étendent perpendiculairement ou sensiblement perpendiculairement à la surface de glissement (9); caractérisé par les caractéristiques suivantes:

e) lorsque le corps d'étanchéité (2) et le corps d'appui (5) sont en condition démontée, l'intervalle extérieur des surfaces d'appui (11, 23), mesuré dans la direction du glissement, est plus important que l'intervalle entre les saillants de fixation (10, 24) du corps d'étanchéité (2);

f) la partie du corps d'étanchéité (2) glissant le long de la surface de glissement (9) est conçue et réalisée de manière à avoir tendance à se déformer dans le sens de l'ouverture, vers la surface de glissement (9), cela au moins dans la région des saillants de fixation (10, 24), sous l'effet de la précontrainte que les surfaces d'appui (11, 23) exercent sur les saillants de fixation (10, 24).

2. Dispositif selon revendication 1, pour réaliser l'étanchéité du piston d'un cylindre de travail, caractérisé par les caractéristiques suivantes:

a) l'autre partie est réalisée en tant que piston portant le corps d'appui (5) réalisé sous forme annulaire;

b) la partie du corps d'étanchéité (2) glissant contre et le long de la surface de glissement est réalisée en forme de manchon, ou encore à la manière d'une manchette en forme de pot.

3. Dispositif selon revendication 1 ou 2, caractérisé par le fait que le corps d'étanchéité (2) présente, perpendiculairement à la surface de glissement (9) et dans la direction du glissement, une section droite en forme de U dont les ailes forment les saillants de fixation (10, 24).

4. Dispositif selon revendication 1, 2 ou 3, caractérisé par les caractéristiques suivantes:

a) le corps d'appui (5) présente au moins un saillant en forme de manchon (12, 22) qui s'étend dans la direction du glissement ou sensiblement dans cette directoin et porte le corps d'étanchéité (2);

b) l'extrémité du saillant (12, 22) forme l'une des surfaces d'appui (11, 23) du corps d'appui (5);

c) des moyens sont prévus pour fournir un soutien élastique au saillant (12, 22), perpendiculairement à la surface de glissement (9).

5. Dispositif selon revendication 4, caractérisé par le fait que le corps d'appui (5) est constitué, au moins dans la région de la jonction entre le saillant (12, 22) et la partie restante du corps d'appui (5), par un matériau à élasticité relativement grande, par exemple par du caoutchouc.

6. Dispositif selon revendication 4 ou 5, caractérisé par le fait que le corps d'appui (5) présente, perpendiculairement à la surface de glissement (9) et dans la direction du glissement, une section droite en forme de T, les deux parties du corps d'appui (5) formant la traverse constituant en leurs extrémités les surfaces d'appui (11, 23) du corps d'appui (5).

7. Dispositif selon au moins l'une des revendications précédentes, caractérisé par le fait que la partie du corps d'appui (5) qui, considérée dans la direciton du glissement, est la partie médiane, est plus éloignée de la surface de glissement (9) que les régions extrêmes (12, 22), s'étendant dans la direction du glissement, du corps d'appui (5).

8. Dispositif selon revendication 2, caractérisé par les caractéristiques suivantes:

a) il est prévu deux organes de soutien rigides (28, 29) qui peuvent être fixés au piston et servent à soutenir les extrémités du corps d'appui (5) présentant les surfaces d'appui (11, 23);

b) entre les organes de soutien (28, 29) et les extrémités du corps d'appui (5) présentant les surfaces d'appui (11, 23), il est prévu des pièces de soutien élastiques (25, 31).

9. Dispositif selon revendication 8, caractérisé par le fait que les pièces de soutien (25, 31) sont réalisées en tant que corps annulaires élastiques, à la manière d'anneaux toriques.

**Claims**

1. A device for sealing two engine parts movable relative to one another, of which the one part (8) has a sliding surface (9) along which the other part (5, 17) slides by means of a sealing component (2) fixed to this part, in particular for sealing the piston of a working cylinder, with the following features:

a) the sealing component (2) consists of a low-friction plastics material of relatively low resilience, for example PTFE;

b) to fix and to support at least the part of the sealing component (2) sliding along the sliding surface there is provided on the other part a supporting component (5);

c) the supporting component (5) is constructed so that it is resilient perpendicularly to the sliding surface (9);

d) the part of the sealing component (2) sliding along the sliding surface (9) is constructed so that it fits around the supporting component (5) in the sliding direction and so that fixing projections (10, 24) of the sealing component (2) extending perpendicularly or approximately perpendicularly to the sliding surface (9) lie against corresponding supporting faces (11, 23) of the supporting component (5) extending perpendicularly or approximately perpendicularly to the sliding surface (9); characterized by the following features:

e) in the dismantled state of sealing component (2) and supporting component (5) the distance measured in the sliding direction between the outer surfaces of the supporting faces (11, 23) is larger than the distance between the inner surfaces of the fixing projections (10, 24) of the sealing component (2);

f) the part of the sealing component (2) sliding along the sliding surface (9) is constructed so that, under the action of the bias exerted by the supporting faces (11, 23) on the fixing projections (10, 24), it attempts to distend, at least in the region of the fixing projections (10, 24), towards the sliding surface (9).

2. A device according to claim 1 for sealing the piston of a working cylinder, characterized by the following features:

a) the other part is constructed as a piston, which carries the supporting component (5) of annular construction;

b) the part of the sealing component (2) sliding along the sliding surface is of sleeve-shaped construction or is in the form of a cup-type sleeve.

3. A device according to claim 1 or 2, characterized in that perpendicular to the sliding surface (9) and in the sliding direction the sealing component (2) has a U-shaped cross-section, of which the arms form the fixing projections (10, 24).

4. A device according to claim 1, 2 or 3, characterized by the following features:

a) the supporting component (5) has at least one sleeveshaped projection (12, 22) which extends in the sliding direction or approximately in this direction and carries the sealing component (2);

b) the end of the projection (12, 22) forms one of the supporting faces (11, 23) of the supporting component (5);

c) means are provided for the resilient mounting of the projection (12, 22) perpendicular to the sliding surface (9).

5. A device according to claim 4, characterized in that, at least in the connecting region between the projection (12, 22) and the remaining part of the supporting component (5), the supporting component (5) consists of a material of relatively good resilience, for example rubber.

6. A device according to claim 4 or 5, characterised in that the supporting component (5) has a T-shaped cross-section perpendicular to the sliding surface (9) and in the sliding direction, the two parts of the supporting component (5) constituting the transverse members forming at their ends the supporting faces (11, 23) of the supporting component (5).

7. A device according to at least one of the preceding claims, characterized in that the middle part of the supporting component (5), seen in the sliding direction, is spaced at a greater distance from the sliding surface (9) than the end regions (12, 22) of the supporting component (5) extending in the sliding direction.

8. A device according to claim 2, characterized by the following features:

a) two rigid supporting members (29, 29) are provided, which are arranged to be fixed on the piston and which serve to support the ends of the supporting component (5) having the supporting faces (11, 23);

b) between the supporting members (28, 29) and the ends of the supporting component (5) having the supporting faces (11, 23), there are provided resilient supporting parts (25, 31).

9. A device according to claim 8, characterized in that the supporting parts (25, 31) are constructed as resilient annular bodies in the manner of O-rings.

## Fig.1

Fig. 2